Europäisches Patentamt

European Patent Office

Office européen des brevets

(19)

(11) Veröffentlichungsnummer : **0 056 162
B1**

(12)

# EUROPÄISCHE PATENTSCHRIFT

(45) Veröffentlichungstag der Patentschrift :
13.03.85

(21) Anmeldenummer : 81110837.2

(22) Anmeldetag : 30.12.81

(51) Int. Cl.⁴ : **C 08 F279/02, C 08 F265/04,
C 08 F255/06**

(54) **Kautschukpulver.**

(30) Priorität : **13.01.81 DE 3100753**

(43) Veröffentlichungstag der Anmeldung :
**21.07.82 Patentblatt 82/29**

(45) Bekanntmachung des Hinweises auf die Patenterteilung : **13.03.85 Patentblatt 85/11**

(84) Benannte Vertragsstaaten :
**DE FR GB IT NL**

(56) Entgegenhaltungen :
**FR-A- 2 239 503
FR-A- 2 319 655
FR-A- 2 354 352
GB-A- 1 027 724**

(73) Patentinhaber : **BAYER AG
Konzernverwaltung RP Patentabteilung
D-5090 Leverkusen 1 Bayerwerk (DE)**

(72) Erfinder : **Lindner, Christian, Dr.
Riehler Strasse 200
D-5000 Köln 60 (DE)**
Erfinder : **Ott, Karl-Heinz, Dr.
Paul-Klee-Strasse 54
D-5090 Leverkusen 1 (DE)**

Jouve, 18, rue St-Denis, 75001 Paris, France

EP 0 056 162 B1

# 0 056 162

**Beschreibung**

Die Erfindung betrifft rieselfähige Kautschukpulver und ein Verfahren zu ihrer Herstellung.

Kautschukpulver müssen rieselfähig sein, damit eine problemlose Einarbeitung, Compoundierung, Verarbeitung, Lagerung und Handhabbarkeit der Polymerisate gewährleistet ist. Beispielweise werden synthetische Kautschuke, die zum Aneinanderklerben neigen, mit Talkum, $TiO_2$ oder $SiO_2$ bepudert bzw. beschichtet. Diese Hilfsstoffe können sich aber nachteilig auf die Eigenschaften der Polymerisate auswirken.

In der DE-OS 2 801 817 wird ein Verfahren beschrieben, elastische Pfropkautschuke in ihrer Handhabbarkeit zu verbessern, indem man ein Vinylpolymerisat an der Oberfläche der Kautschukteilchen koaguliert ; diese sind selbst auch im koagulierten Zustand, jedoch nicht vom Koagulationsmedium abgetrennt. Dieses Verfahren erfordert eine gesonderte Polymerisationsstufe für das Vinylpolymerisat. Außerdem verändert das ungepfropfte Vinylpolymerisat die Eigenschaften des Pfropfkautschuks.

In der europäischen Patentschrift 0 009 250 wird ein abgewandeltes Verfahren beschrieben ; dabei wird zusätzlich zu dem Vinylpolymeren ein organisches Lösungsmittel eingesetzt. Dieses Verfahren hat die gleichen Nachteile, zudem muß das Lösungsmittel wieder entfernt werden. Wendet man die bekannten Methoden auf ungepfropfte Kautschuke an, so entstehen fast immer Polymerisatmischungen mit ungünstigeren Stoffeigenschaften.

Aus der DDR-Patentschrift 86 500 war weiter bekannt, einen Restmonomere enthaltenden Kautschuklatex zu koagulieren und anschließend die verbliebenen (in diesem Fall unerwünschten) Restmonomere durch Polymerisation zu entfernen. Rieselfähiges Kautschukpulver erhält man so nicht, weil die polymerisierten Restmonomeren zu einem mit dem Kautschuk identischen Polymerisat führen.

Aus der DE-OS 2 843 063 war bekannt, in Gegenwart einer Suspension eines ABS-Pfropfcopolymerisats weiteren Mengen der Monomeren zu polymerisieren, die bereits die Pfropfhülle bilden.

Gegenstand der Erfindung ist ein Verfahren zur Herstellung von rieselfähigen Kautschukpulvern mit Teilchen eines mittleren Durchmessers von 0,01 mm bis 10 mm, das dadurch gekennzeichnet ist, daß man einen Latex eines Dien-, Acrylat- oder EPDM-Kautschuks mit einer Glasübergangstemperatur unter 0 °C unter Ausbildung einer wäßrigen Aufschlämmung des Kautschuks vollständig bricht, danach 2 bis 20 Gew.-%, bezogen auf den Kaustchuk, eines oder mehrerer Vinylmonomerer, die Polymerisate mit Glasübergangstemperaturen über 25 °C bilden, in die Aufschlämmung einbringt und das oder die Monomeren, gegebenenfalls nach Zugabe eines radikalbildenden Katalysators, in Abwesenheit jeglichen Suspendiermittels polymerisiert und abschließend das Kautschukpulver isoliert, z. B. durch Filtration oder Zentrifugation, und danach trocknet.

Ein weiterer Gegenstand der Erfindung sind rieselfähige Kautschukpulver aus Teilchen eines Dien-, Acrylat- oder EPDM-Kautschuks mit einem mittleren Durchmesser von 0,01 mm bis 10 mm, bevorzugt 0,05 bis 8 mm, insbesondere bevorzugt 0,1 mm bis 4 mm, die eine aufpolymerisierte Hülle aus dem Polymerisat oder Copolymerisat eines oder mehrerer Vinylmonomeren, die Polymerisate mit Glasübergangstemperaturen über 25 °C bilden, in einer Menge von 2 bis 20 Gew.%, bezogen auf den Kautschuk, enthalten, wobei der Kautschuk selbst eine Glasübergangstemperatur unter 0 °C aufweist.

Erfindungsgemäß sind alle Kautschuke geeignet, die sich von Dienen oder Acrylaten ableiten und die als wäßrige Emulsionen anfallen. Ebenfalls geeignet sind EPDM-Kautschuke, d. h., Terpolymerisate von Ethylen, Propylen und einem nicht-konjugierten Dien, wenn diese als wäßrige Emulsion vorliegen bzw., wenn sie mittels spezieller Verfahrensmaßnahmen in eine wäßrige Emulsion übergeführt worden sind.

Alle erfindungsgemäß geeigneten Kautschuke können in unvernetzter, teilvernetzter oder hochvernetzter Form vorliegen.

Besonders bevorzugt sind Butadien-(Co)-Polymerisate (mit z. B. Monomeren wie Styrol, Acrylnitril, Vinylethern, Acrylsäureestern, Methacrylsäureester), sowie aliphatische Acrylsäureester-(Co)-Polymerisate (Acrylatkautschuke).

Als Acrylatkautschuke im Sinne der Erfindung werden Polymerisate bzw. Copolymerisate aus $C_1$-$C_{12}$-Alkylacrylaten, insbesondere Methyl-, Ethyl-, Propyl-, n-Butyl-Hexylacrylat, sowie Polymerisate, die aus wenigstens 70 Gew.-% $C_1$-$C_{12}$-Alkylacrylatpolymerisaten aufgebaut sind, verstanden ; als Comonomere für die $C_1$-$C_{12}$-Alkylacrylate können z. B. Styrol, Acrylnitril, Alkylmethacrylat, Butadien, Isopren, Vinylester, Vinylether, Vinylcarbonsäure, Allylalkohol, Allylester, Allylether fungieren ; die Acrylatkautschuke können ganz oder partiell vernetzt sein, z. B. durch polyfunktionelle Vinyl- bzw. Alylmonomere.

Bevorzugte Acrylatkautschuke sind Emulsionspolymere, die einen Gelgehalt von > 60 Gew.% aufweisen, und die mit polyfunktionellen und/oder pfropfvernetzenden und/oder pfropfaktiven Monomeren vernetzt wurden, z. B. mit Triallyl(iso)cyanurat, Allyl(meth)acrylat, Maleinsäureallylester, etc. Solche Acrylatkautschuke sind bekannt (vergl. DE-OS 2 256 301, DE-OS 2 558 476, DE-AS 2 624 656, Europäisches Patent 0 001 782).

Das erfindungsgemäße Verfahren kann wie folgt durchgeführt werden :

Zuerst wird ein Kautschuklatex erzeugt. Dann wird diese Emulsion vollständig gebrochen, z. B. mit Elektrolyten (wie Säuren, Basen), mechanische Einwirkung oder Erhitzen. Bevorzugt ist Koagulation mit wäßrigen Lösungen von Säuren und/oder Salzen bei Temperaturen von ca. 30 bis 100 °C. Erhalten wird eine heterogene Aufschlämmung von diskreten Polymerpartikeln verschiedener Form und Größe in

2

**0 056 162**

Wasser. Form und Größe der Partikel kann durch Variation der Fällungsbedingungen beeinflußt werden.

In diese Polymerisataufschlämmung werden nun, vorzugsweise bei Temperaturen von ca. 30 bis 100 °C, die oder das Vinylmonomere wie Styrol, Acrylnitril, Allylmethacrylat, Acrylsäure, Methacrylsäure, Vinylacetat und gegebenenfalls Regler, Radikalinitiatoren (insbesondere wasserlösliche Persulfate) oder Antioxidantien, in die stark bewegte Polymerisataufschlämmung eingebracht und radikalisch polymerisiert.

Das erfindungsgemäße Verfahren kann dis-, halb- oder vollkontinuierlich durchgeführt werden.

Die erfindungsgemäßen Polymerisatpulver sind lagerbeständig, rieselfähig und nichtklebend. Sie lassen sich besonders leicht und wirtschaftlich, z. B. durch Schmelzcompoundierung verarbeiten, z. B. zu Elastomeren, Gummi, hochflexiblen Kunststoffen, etc.

Ausführungsbeispiele

1. Herstellung von Acrylatkautschukemulsionen

1.1. In einem Reaktor wird unter Rühren bei 63 °C folgende Mischung vorgelegt :

```
5 000       Gew.-Tle Wasser
   14       Gew.-Tle Kaliumpersulfat
    0,912 4 Gew.-Tle Triallylcyanurat
  399,087 6 Gew.-Tle n-Butylacrylat
    2       Gew.-Tle Na-Sulfonat von C₁₄-C₁₈-Kohlenwasserstoffen
```

Innerhalb von 5 Std. wurden bei 63 °C folgenden Mischungen in den Reaktor getrennt eindosiert :

```
Mischung 1 :
      90 Gew.-Tle Na-Sulfonat von C₁₄-C₁₈-Kohlenwasserstoffen
  11 900 Gew.-Tle Wasser
Mischung 2 :
      23,09 Gew.-Tle Triallylcyanurat
  10 100, 91 Gew.-Tle n-Butylacrylat
```

Anschließend läßt man 2 Std. bei 65 °C auspolymerisieren. Die gebildeten Polymerisate besitzen Gelgehalte von 85-95 Gew.-%.

1.2 In einem Reaktor wird unter Rühren bei 63 °C folgende Mischung vorgelegt :

```
5 000 Gew.-Tle Wasser
    5 Gew.-Tle Kaliumpersulfat
  100 Gew.-Tle Methylmethacrylat
  300 Gew.-Tle Ethylhexylacrylat
    2 Gew.-Tle Na-Sulfonat von C₁₄-C₁₈-Kohlenwasserstoffen.
```

Innerhalb von 4 Std. wurden bei 63 °C folgende Mischungen in den Reaktor getrennt eindosiert :

```
Mischung 1 :
      90 Gew.-Tle Na-Sulfonat von C₁₄ bis C₁₈-Kohlenwasserstoffen
  11 900 Gew.-Tle Wasser
Mischung 2 :
     400 Gew.-Tle Methylmethacrylat
   9 724 Gew.-Tle Ethylhexylacrylat
```

Anschließend läßt man 3 Std. bei 65 °C auspolymerisieren.

2. Herstellung von Dienkautschukemulsionen

2.1 In einem Reaktor wird unter Rühren folgende Emulsion bei 65 °C bis praktisch zum vollständigen Monomerumsatz innerhalb von ca. 22 Std. polymerisiert :

```
100     Gew.-Tle Butadien
  1,8   Gew.-Tle Na-Salz der disproportionierten Abietinsäure
  0,257 Gew.-Tle Natriumhydroxid
  3     Gew.-Tle n-Dodecylmercaptan
  1,029 Gew.-Tle Na-Ethylendiamintetraacetat
  0,023 Gew.-Tle Kaliumpersulfat
176     Gew.-Tle Wasser
```

3

**0 056 162**

Es wird ein Latex erhalten, der Polybutadienteilchen in einer Konzentration von ca. 35-36 % enthält.

2.2 Ein teilvernetztes Butadien-Acrylnitril-Copolymerisat (z. B. mit 29 % Acrylnitril) mit einer Mooney-Viskosität (ML 4, 100 °C, DIN 53 523 : 70-90), das z. B. als Polymerweichmacher eingesetzt wird und bekannt ist (z. B. EP 0 005 736), wird durch wäßrige Emulsionspolymerisation hergestellt.

3. Herstellung der erfindungsgemäßen Kautschukpulver

3.1 In einem Reaktor werden bei 70 °C vorgelegt :

18 800 Gew.-Tle Wasser
245 Gew.-Tle Bittersalz ($MgSO_4$ x $H_2O$)
Unter Rühren läßt man nun in 2 Std. folgende Menge Latex in den Reaktor einlaufen (unter Rühren) :
11 200 Gew.-Tle Latex 1.1.

Nach Beendigung dieses Zulaufes werden 3 Gew.-Tle Kaliumpersulfat in den Reaktor gegeben und anschliessend werden 460 Gew.-Tle Methylmethacrylat in I Std. gleichmäßig unter Rührung eindosiert. Anschließend rührt man die Aufschlämmung 3 Std. bei 80 °C. Das Polymerisat kann nun isoliert werden.

3.2. Beispiel 3.1 wird wiederholt, anstatt Methylmethacrylat wird eine Mischung aus 130 Gew.-Tln Acrylnitril und 340 Gew.-Tln Styrol in die Kautschukaufschlämmung eindosiert.

3.3. Beispiel 3.1 wird wiederholt, anstatt Kaliumpersulfat wird 0,4 Gew.-Tle Benzoylperoxid, gelöst im Methylmethacrylat, eingesetzt.

3.4. Beispiel 3.1 wird wiederholt, anstatt Methylmethacrylat wird eine Mischung aus 360 Gew.-Tln Methylmethacrylat, 100 Gew.-Tln Styrol und 0,2 Gew.-Tln Benzoylperoxid eingesetzt.

3.5. Beispiel 3.1 wird wiederholt, anstatt Latex 1.1 wird der Latex 1.2 eingesetzt.

3.6. Beispiel 3.1 wird wiederholt, anstatt Latex 1.1 wird der Latex 2.1 eingesetzt.

3.7. In einem Reaktor werden bei 60 °C vorgelegt :

5 000 Gew.-Tle Wasser
40 Gew.-Tle $CaCl_2$ (Calciumchlorid)
30 Gew.-Tle Essigsäure

Unter Rühren läßt man nun in 2 Std. folgende Menge Latex in den Reaktor einlaufen (Rühren) :

4 545 Gew.-Tle Latex des unter 2.2 beschriebenen Copolymerisats (Polymerfeststoff : 22 Gew.-%)

Nach Beendigung des Latexzulaufs in die Elektrolytlösung dosiert man unter Rühren innerhalb eine Stunde 99 Gew.-Tle Methylmethacrylat in die Polymeraufschlämmung bei 70 °C. Anschließend fügt man 1,4 Gew.-Tle Kaliumpersulfat hinzu und rührt den Brei 3 Std. bei 90 °C nach. Nach Stabilisierung mit phenolischen Antioxidantien wird das Pulver isoliert.

4. Vergleichsbeispiele

4.1 Herstellung eines Emulsionspfropfpolymerisats aus ca. 90 % Acrylatkautschuk und 10 % Methylmethacrylat

In einem Reaktor werden vorgelegt :

3 296 Gew.-Tle Latex 1.1
1,5 Gew.-Tle Kaliumpersulfat
90 Gew.-Tle Wasser

Bei 65 °C werden folgende Lösungen innerhalb von 4 Std. getrennt in den Reaktor eindosiert :
Lösung A : 146 Gew.-Tle Methylmethacrylat
Lösung B : 150 Gew.-Tle Wasser
3 Gew.-Tle Na-Sulfonat von $C_{14}$-$C_{18}$-Kohlenwasserstoffen
Anschließend läßt man bei 65 °C 4 Std. lang auspolymerisieren. Dieser Latex wird unter Rühren in 2 Std. bei 70 °C in einer Fällflotte folgender Zusammensetzung eingerührt :

7 555 Gew.-Tle Wasser
100 Gew.-Tle Bittersalz ($MgSO_4 \times H_2O$)

4

# 0 056 162

Nach Beendigung des Zulaufs wird die Mischung auf 80 °C aufgeheizt und 1 Std. bei 80 °C gerührt. Dann wird das Polymer isoliert.

4.2 In einem Reaktor werden bei 60 °C vorgelegt :

5 000 Gew.-Tle Wasser
40 Gew.-Tle Calciumchlorid
30 Gew.-Essigsäure

Unter Rühren läßt man nun in 2 Std. folgende Menge Latex in den Reaktor einlaufen :

4 545 Gew.-Tle des Latex aus Beispiel 2.2

Nach Beendigung des Latexzulaufs in die Elektrolytlösung rührt man den Brei 3 Std. bei 90 °C nach. Der Brei wird zum Pulver aufgearbeitet analog Beispiel 3.7.

5. Vergleichbare Pulver- und Handhabbarkeitscharakterisierung der Produkte 3 und 4.

Die Polymerisataufschlämmungen werden mittels einer Laborschleuder, deren Schleuderkammer einen Innendurchmesser von 30 cm aufweist und die mit 1 500 U/min arbeitet, bei Raumtemperatur aufgearbeitet.

Dabei wird folgendermaßen vorgegangen :

Die in den obigen Beispielen beschriebenen Polymerisataufschlämmungen werden in solchen Mengen in die Schleuder eingeführt, daß pro Aufarbeitungsgang 1 kg Feststoff (bezogen auf Trockenware) isoliert werden kann ; anschließend wird bei laufender Schleuder 20 min mit Wasser derart gewaschen, bis das ablaufende Waschwasser nahezu elektrolytfrei ist. Danach wird 5 min trockengeschleudert. Von diesem trockengeschleuderten Material wird dann der Wassergehalt bestimmt. Danach trocknet man die feuchten Polymeren bei 70 °C 24 h lang auf Blechen in Heißlufttrockenschränken.

Die so anfallenden Polymerisate werden in bezug auf Pulverigkeit und Zusammenkleben charakterisiert.

| Polymer | Restwassergehalt nach Trockenschleudern (Gew.-%) | Charakterisierung der trockenen Polymere |
|---------|--------------------------------------------------|------------------------------------------|
| 3.1 | 28 | rieselfähiges Pulver, das bei Lagerung nicht zusammenbackt |
| 3.2 | 27 | " " |
| 3.3 | 30 | " " |
| 3.4 | 27 | " " |
| 3.5 | 36 | " (grobteilig) |
| 3.6 | 30 | " |
| 3.7 | 38 | " |
| 4.1 | 49 | klumpig, zusammenbackendes kautschukartiges Material |
| 4.2 | 47 | zusammenklebendes, fellbildendes Material |

Wie aus der Tabelle zu ersehen ist, zeichnen sich die erfindungsgemäßen Polymerisate 3.1-3.7 nicht nur durch vorteilhafte niedrige Restwassergehalte im Vergleich zu Beispiel 4 aus, sondern insbesondere durch günstige Pulvereigenschaften, die die technologische Weiterverwendbarkeit der Materialien wesentlich günstig beeinflussen.

# 0 056 162

Die Vorteile des erfindungsgemäßen Verfahrens werden besonders deutlich, wenn das Beispiel 4.1 mit den Beispielen 3.1 und 3.3 verglichen wird.

## Ansprüche

1. Verfahren zur Herstellung eines rieselfähigen Kautschukpulvers mit Teilchen eines mittleren Durchmessers von 0,01 mm bis 10 mm, dadurch gekennzeichnet, daß man einen Latex eines Dien-, Acrylat- oder EPDM-Kautschuks mit einer Glasübergangstemperatur unter 0 °C unter Ausbildung einer wäßrigen Aufschlämmung des Kautschuks vollständig bricht, danach 2 bis 20 Gew.-%, bezogen auf den Kautschuk, eines oder mehrerer Vinylmonomerer, die Polymerisate mit Glasübergangstemperaturen über 25 °C bilden, in die Aufschlämmung einbringt und das oder die Monomeren, gegebenenfalls nach Zugabe eines radikalbildenden Katalysators, in Abwesenheit jeglichen Suspendiermittels polymerisiert und abschließend das Kautschukpulver isoliert, z. B. durch Filtration oder Zentrifugation, und danach trocknet.

2. Verfahren nach Anspruch 1, dadurch gekennzeichnet, daß man als Kautschuk Homo- und Copolymerisate des Butadiens, Isoprens oder Chloroprens oder Homo- oder Copolymerisate von Alkylacrylaten mit Kautschukeigenschaften oder Terpolymerisate von Ethylen, Propylen und einem nicht-konjugierten Dien einsetzt.

3. Verfahren nach Anspruch 1, dadurch gekennzeichnet, daß man als Vinylmonomere Styrol, Acrylnitril, Alkylmethacrylat oder Mischungen davon verwendet.

4. Rieselfähige Kautschukpulver aus Teilchen eines Dien-, Acrylat- oder EPDM-Kautschuks mit einem mittleren Durchmesser von 0,01 mm bis 10 mm, die eine aufpolymerisierte Hülle aus dem Polymerisat oder Copolymerisat eines oder mehrerer Vinylmonomeren, die Polymerisat mit Glasübergangstemperaturen über 25 °C bilden, in einer Menge von 2 bis 20 Gew.-%, bezogen auf den Kautschuk, enthalten wobei der Kautschuk selbst eine Glasübergangstemperatur unter 0 °C aufweist.

## Claims

1. Process for the preparation of a free-flowing rubber powder containing particles having an average diameter of 0.01 mm to 10 mm, characterised in that a latex of a diene, acrylate or EPDM rubber having a glass transition temperature of below 0 °C is completely broken with the formation of an aqueous suspension of the rubber, 2 to 20 % by weight, based on the rubber, of one or more vinyl monomers which form polymers having glass transition temperatures of above 25 °C are then introduced into the suspension and the monomer(s) is/are polymerised in the absence of any suspending agents and optionally after adding radical-forming catalysts, and finally the rubber powder is isolated, for example by filtration or centrifugation, and then dried.

2. Process according to Claim 1, characterised in that homo- and copolymers of butadiene, isoprene or chloroprene or homo- or copolymers of alkyl acrylates having rubber properties or terpolymers of ethylene, propylene and a non-conjugated diene are used as the rubber.

3. Process according to Claim 1, characterised in that styrene, acrylonitrile, alkyl methacrylate or mixtures thereof are used as vinyl monomers.

4. Free-flowing rubber powders consisting of particles of a diene, acrylate or EPDM rubber having an average diameter of 0.01 mm to 10 mm, which contain, polymerised thereon, a shell of the polymer or copolymer of one or more vinyl monomers which form polymers having glass transition temperatures of above 25 °C, in a quantity of 2 to 20 % by weight, based on the rubber, the rubber itself having a glass transition temperature of below 0 °C.

## Revendications

1. Procédé de production d'un caoutchouc en poudre pouvant s'écouler, en particules d'un diamètre moyen de 0,01 à 10 mm, caractérisé en ce qu'on rompt totalement un latex d'un caoutchouc diénique, d'un caoutchouc d'acrylate ou d'un caoutchouc EPDM ayant une température de passage par l'état vitreux inférieure à 0 °C avec formation d'une suspension aqueuse, on introduit ensuite dans la suspension 2 à 20 % en poids, par rapport au caoutchouc, d'un ou plusieurs monomères vinyliques qui forment des polymères ayant des températures de passage par l'état vitreux supérieures à 25 °C et on polymérise le ou les monomères, éventuellement après addition d'un catalyseur engendrant des radicaux, en l'absence de tout agent de mise en suspension, et finalement on isole le caoutchouc en poudre, par exemple par filtration ou centrifugation, puis on le sèche.

2. Procédé suivant la revendication 1, caractérisé en ce qu'on utilise comme caoutchouc des homopolymères et des copolymères de butadiène, d'isoprène ou de chloroprène ou des homopolymères ou des copolymères d'acrylates d'alkyle à propriétés de caoutchouc ou des terpolymères d'éthylène, de propylène et d'un diène non conjugué.

3. Procédé suivant la revendication 1, caractérisé en ce qu'on utilise comme monomères vinyliques le styrène, l'acrylonitrile, un méthacrylate d'alkyle ou des mélanges de ces monomères.

4. Caoutchouc en poudre pouvant s'écouler, formé de particules d'un caoutchouc diénique, d'un

6

**0 056 162**

caoutchouc d'acrylate ou d'un caoutchouc EPDM ayant un diamètre moyen de 0,01 à 10 mm, qui contiennent une enveloppe produite par polymérisation en place du polymère ou de copolymère d'un ou plusieurs monomères vinyliques qui forment des polymères à températures de passage par l'état vitreux au-dessus de 25 °C, en une quantité de 2 à 20 % en poids par rapport au caoutchouc, le caoutchouc lui-même ayant une température de passage par l'état vitreux inférieure à 0 °C.

7